# EUROPEAN PATENT SPECIFICATION

(11) **EP 1 339 289 B1**
(45) Date of publication and mention of the grant of the patent: **04.10.2006**
(21) Application number: 01982491.1
(22) Date of filing: 14.11.2001
(51) Int. Cl.: A23D 7/00, A23D 7/02

(54) **POURABLE FRYING COMPOSITION**
VERGIESSBARE BRATZUSAMMENSETZUNG
COMPOSITIONS LIQUIDES POUR FRITURES

(30) Priority: 07.12.2000 EP 00310907
(43) Date of publication of application: 03.09.2003
(73) Proprietor: UNILEVER N.V., 3013 AL Rotterdam (NL); UNILEVER PLC, London, Greater London EC4P 4BQ (GB)
(72) Inventor: FABIAN, Jürgen, Heinz, 1460 Boksburg East, Gauteng (ZA); SEIN, Arjen, Unilever Research Vlaardingen, NL-3133 AT Vlaardingen (NL); VERHEIJ, Jan, A., Unilever Research Vlaardingen, NL-3133 AT Vlaardingen (NL); WILLIAMS, Andrea, Unilever Research Colworth, Sharnbrook, Bedfordshire MK44 1LQ (GB)
(74) Representative: Joppe, Hermina Laura Petronella
(86) International application number: PCT/EP2001/013310
(87) International publication number: WO 2002/045519

(56) References cited:
- EP-A- 0 253 429
- EP-A- 0 716 811
- WO-A-00/38546
- GB-A- 1 359 639
- US-A- 4 292 333
- PATENT ABSTRACTS OF JAPAN vol. 1998, no. 10, 31 August 1998 (1998-08-31) -& JP 10 113145 A (NISSHIN OIL MILLS LTD:THE), 6 May 1998 (1998-05-06)
- PATENT ABSTRACTS OF JAPAN vol. 1997, no. 10, 31 October 1997 (1997-10-31) -& JP 09 163952 A (NISSHIN OIL MILLS LTD:THE), 24 June 1997 (1997-06-24)

## Description

### Field of the invention

The invention relates to pourable, water continuous frying compositions which are storage stable and show good spattering behaviour and frying characteristics.

### Background to the invention

There is a continuous desire among consumers for frying products which are easily dosed and do not show spattering upon use as shallow frying agent.

Spattering of a common frying medium, such as margarine which is a water in oil emulsion, is believed to be caused by superheating of water droplets. At a certain point after heating the frying medium said water droplets explosively evaporate, whereby oil can be spread all over the surroundings of a frying pan wherein the emulsion is heated. This may cause danger to the person who intends to fry foodstuff in the heated emulsion.
Another disadvantage of frying products that is often encountered is residue formation. Brown or black residue may be formed when for example biopolymers such as proteins are heated in a frying pan. Preferred products show little or no residue formation when used as a frying agent.

Common frying agents such as butter or margarine are fat continuous and hence show the undesired spattering behaviour as explained above.

Due to their easy dosing, liquid margarines have gained popularity with consumers.

US-A-4,292,333 relates to low fat content butter flavoured liquid spreads which simulate the flavour, texture, mouthfeel, appearance and stability of commercial liquid margarine.

US-A- 4,273,790 discloses a low fat liquid spread comprising less than 40 wt% fat, a continuous aqueous phase comprising a stabiliser and an emulsifier system comprising a combination of a lipophilic emulsifier and a hydrophilic emulsifier, thus providing a stable liquid emulsion at 40 °F.

GB-A-1,359,639 discloses pourable margarines having increased stability against oil and water separation which are suitable for shallow frying.

JP-A-10113145 and JP-A-09163952 disclose O/W type emulsified frying compositions with good spattering behaviour.

However none of the above documents provides a frying product which is easily pourable, shows good spattering behaviour, low sediment on shallow frying use and a stability against serum separation on shelf. Therefore it is an object of the invention to provide products that show these characteristics.

According to a further object the products are heat stable such that they can be subjected to sterilisation or pasteurisation treatments.

### Summary of the invention

It has now surprisingly been found that a composition which comprises a specified emulsifier, a specific fat content dispersed in an aqueous phase and an antispattering agent, shows very good spattering behaviour, is storage stable and does not lead to a lot of burnt sediment formation upon use as a frying agent.

Therefore the invention relates to a pourable, water continuous frying composition having a Bostwick value at 15°C of at least 5, comprising more than 50 to 80 wt% fat, an antispattering agent, at least one emulsifier having a hydrophilic/lipophilic balance value of at least 7, and optionally a biopolymer in an amount of at most 0.3 wt% on total composition weight.

In a second aspect the invention relates to a process for the preparation of this emulsion.

In a further aspect the invention relates to use of this emulsion for shallow frying.

### Detailed description of the invention

Products according to the invention are products with a Bostwick value of at least 5 at 15 °C. The Bostwick value is measured as described in the examples.
Preferably the Bostwick value for products according to the invention is 8 - 24, more preferably 11 - 21, most preferably 15 - 18 at 15 °C.

Spattering can be measured by determining the spattering value according to the method illustrated in the examples. Preferably food products according to the invention show a primary spattering value, SV1, (spattering upon heating of a frying product such as margarine, without incorporation of a food product to be fried) of from 7 to 10, more preferably from 8.5 to 10. The secondary spattering value, SV2, (spattering upon incorporation of a food product such as meat in a shallow frying product) for products according to the invention is preferably from 5-10.

Upon use of the composition according to the invention as a frying agent, unexpected good primary and secondary spattering behaviour was observed. Furthermore, despite the relatively low fat content, the emulsions retained good pourability compared to fat continuous pourable frying compositions in the same fat range. Compared to the known fat continuous liquid margarines of varying fat content, the current compositions show better pourability at the same fat content which results in easier dosing, a non fatty appearance and less residue in a bottle from which the composition is poured. Furthermore the current compositions do not require the presence of a hardstock fat which can be advantageous.
Moreover the claimed compositions are storage stable.

Storage stability is defined as having a water separation layer at the bottom of a glass jar of below 7 vol% after storage for 2 weeks at 15 °C. Preferably the water separation layer is below 5 vol%, more preferred below 2 vol% of the total product volume.
Advantageously this stability can be obtained without the need for a solid fat being present for structuring.

Heat stability is defined as an oil phase separation of less than 3 vol% separated oil after storage of the composition in a glass container at 121 °C for 10 minutes. The separation volume is measured directly after the heat treatment.

The compositions according to the invention are water continuous products which comprise an aqueous phase and a dispersed fat phase.
In order to ensure that the emulsion of the fat in the aqueous phase is stable, the products comprise at least one emulsifier which is characterised by a hydrophilic/lipophilic balance value of at least 7. This value is abbreviated as HLB value. The HLB value is a well known measure of balance between the hydrophilicity and the lipophilicity of an emulsifier. For a discussion of this value reference is made to "An introdution to food colloids" by Eric Dickinson, Oxford University Press, 1992, page 47-49.

Preferably the emulsifier is selected from the group comprising di-acetyl tartaric acid esters of monoglycerides and/or diglycerides (DATEM), polyoxyethylene sorbitan fatty acid esters (Tween), sucrose esters, sodium stearoyl lactylate (SSL), polyglycerol esters (PGE), acetylated pectin, esters of citric acid with monoglycerides and/or with diglycerides (CAE), lactic acid esters of mono-and/or diglycerides, succinic acid esters of mono-and/or diglycerides; or combinations thereof.

More preferably the emulsifier is selected from the group: di-acetyl tartaric acid esters of monoglycerides and/or diglycerides (DATEM), polyoxyethylene sorbitan fatty acid esters (Tween), sucrose esters, polyglycerol esters (PGE)and esters of citric acid with monoglycerides and/or with diglycerides (CAE).

Di-acetyl tartaric acid esters of mono-and/or diglycerides (DATEM), were found to lead to highly stable emulsions which showed a primary spattering value of at least 8 and secondary spattering value of at least 5 and often even at least 7 and giving no sediment after shallow frying.
Therefore in a preferred embodiment, the emulsifier is a di-acetyl tartaric acid ester of mono-and/or diglycerides (DATEM).

Sucrose ester were found to lead to highly stable emulsions which showed a primary spattering value of at least 8 and secondary spattering value of at least 5 and often even at least 7 and giving no sediment after shallow frying.
Although single emulsifiers are preferred in view of costs and ease of processing, a combination of emulsifiers fulfilling the HLB value requirement is also encompassed in the invention. Besides the emulsifier with HLB value of at least 7 other emulsifiers can be present, but their presence is not required to fulfil at least some of the objects of the current invention.

The amount of emulsifier in the claimed frying composition is such that the emulsion is storage stable, heat stable and still shows good frying behaviour.
It will be appreciated that the amount of emulsifier added varies with the type of emulsifier and the ratio between the fat phase and the aqueous phase of the emulsion.
Generally, the lower the amount of fat, the lower the amount of emulsifier can be.

Suitable amounts of emulsifier were found to be between 0.1 and 5 wt% on total frying composition weight. Preferably the total amount of emulsifier is from 0.35 to 5 wt%, more preferably from 0.5 to 3 wt%.

In a highly preferred embodiment, the invention relates to a pourable water continuous frying composition having a Bostwick value at 15 °C of at least 5, comprising 40 to 80 wt% fat, and 0.3 to 3 wt%, preferably 0.35 to 3 wt% of di-acetyl tartaric acid ester of mono- and/or diglycerides.

In addition to an emulsifier, the composition comprises an antispattering agent to further improve frying characteristics. Any suitable antispattering agent can be used, but it was found that a combination of salt and a lecithin leads to particularly good results.
Although these compounds are well known antispattering agents for fat continuous frying agents, their positive effect in a pourable, water continuous composition is unexpected.

Therefore in a preferred embodiment, the antispattering composition comprises salt in an amount of from 0.1 to 5 wt%, preferably 0.1 to 3 wt% on total weight of the frying composition and a lecithin in an amount of from 0.05 to 2 wt%, preferably 0.05 to 1 wt% on total weight of the frying composition.

The total amount of antispattering agent is preferably from 0.15 to 7 wt% on total composition weight.

Lecithin can be obtained in the form of several types, depending on the process used for its preparation.
For the purpose of the invention, lecithins, which comprise phosphoacylglycerols, can be divided in three groups according to their preparation. The first group is formed by native lecithins such as Bolec ZT^{tm}.

Native lecithins are for example obtained from triglyceride oils which have been filtered, extracted and stripped.

The second group of lecithins is formed by (partly) hydrolysed lecithins which originate from native lecithins which have been hydrolysed for example by use of the enzyme phospholipase A or by chemical hydrolysis. Hydrolysed lecithins can also be prepared by chemical synthesis.
A third group of lecithins comprises fractionated lecithins such as the alcohol soluble fraction of native lecithins such as Cetinol^{tm}.
This type of lecithin can be obtained in a process wherein native lecithins are extracted with alcohol.

Examples of these three groups of lecithins are:
native lecithin: Bolec ZT^{(tm)}, Adlec^{(tm)}, Sternpur PM^{(tm)}; hydrolyzed lecithin BOLEC MT^{(tm)}, Sternphil^{(tm)}, Adlec E^{(tm)}; fractionated lecithin: Cetinol^{(tm)}, Nathin 3-KE^{(tm)}.

For the purpose of the invention lecithins are from vegetable origin. Lecithins in each group can optionally be de-oiled lecithins.

In a preferred embodiment lecithin is fractionated lecithin. The amount of fractionated lecithin is preferably 0.15 - 3 wt%, more preferably 0.2 - 2wt%, most preferably 0.2 - 1wt%. Alternative antispattering agents include dispersed gas phase, sand, hydrophobic particles such as silica particles, citric acid esters.

Optionally the composition according to the invention comprises a biopolymer to improve emulsion stability. More preferred this biopolymer is selected from the group comprising proteins, starches, pectins, carrageenans, alginates, galactomannans (e.g. guar gum, locust bean gum), celluloses and modified celluloses, bacterial exopolysaccharides (e.g. xanthan, gellan).

The amount of biopolymer when added is below 0.3 wt% to ensure that excessive sediment formation and burning are prohibited.

Most preferred, biopolymer is present in an amount of from 0.01 to 0.3 wt%.

The pH of the composition according to the invention is preferably from 3 to 8.
For reasons of microbiological stability the pH can be lowered to between 0.5 and 5, preferably 2.5 - 5, by the use of any suitable, food grade acid.

The composition according to the invention comprises a fat in an amount of more than 50 to 80 wt%.
Preferred compositions comprise 51 - 75 wt% fat; more preferably 55 - 75 wt% fat, most preferably 55 - 65 wt% fat.

The fat can be any fat, but a fat rich in triglycerides comprising (poly) unsaturated fatty acid residues is highly preferred. As mentioned above one of the advantages of the claimed composition is that solid fat (such as hardened rapeseed oil) is not required to obtain a stable composition. For common, fat continuous, pourable frying compositions, a solid fat is usually added to improve the product stability. These solid, hardened fats contain high amounts of saturated fatty acids, which are generally considered less beneficial for health than fats rich in triglycerides comprising (poly) unsaturated fatty acid residues.

Therefore the fat is preferably selected from the group comprising sunflower oil, soybean oil, rapeseed oil, peanut oil, safflower oil, cottonseed oil, olive oil, corn oil, groundnut oil, or low melting butterfat fractions and/or combinations thereof. These fats may be partially hydrogenated.

Most advantageously the fat or combination of fats is selected such that the solid fat content of the fat or fat blend is 0% at 15 °C and above.

The fatty phase can also comprise sucrose polyesters (SPE's).

The composition is water continuous which implies that the fat is dispersed in a continuous aqueous phase in the form of fat droplets.
Storage stable compositions which show little creaming advantageously are characterised by an average fat droplet size *(d*_{*43*}*)* of the fat of less than 8 µm, preferably less than 6 µm, more preferred from 0.35 to 4 µm.

In addition to the above-mentioned ingredients, compositions according to the invention may optionally contain further ingredients suitable for use in these products. Examples of these materials are sugar or other sweetener materials, EDTA, spices, salt (other than antispattering salts), bulking agents, egg yolk, anti-oxidants, flavouring materials, colouring materials, acids, preserving agents, and fruit and/or vegetable particles.

In a further aspect the invention relates to a process for the preparation of the claimed frying composition.
In general any suitable process can be used.

Preferably the process comprises the steps of emulsification of a fat phase comprising fat phase ingredients with an aqueous phase comprising aqueous phase ingredients such that the resulting average fat droplet size d_{*43*} is below 8 µm.

Fat phase ingredients are those ingredients which are either fat soluble or fat dispersible. Examples are fat soluble emulsifiers and antispattering agents such as lecithin, oil soluble flavour/colouring composition, colourants, vitamins and anti-oxidants.

Aqueous phase ingredients are those ingredients which are either water soluble or water dispersible. Examples of such ingredients are stabilisers and protein, salt, preservatives, acidifiers, emulsifiers.

Biopolymer, when added, is preferably added to the aqueous phase before it is mixed with the fat phase.

In a preferred embodiment, the aqueous phase comprising aqueous phase ingredients is heated to at least 50 °C before mixing with the oil phase.
Preferably the fat phase is added to the aqueous phase slowly, while mixing.

Emulsification by use of a homogeniser, a colloid mill or a high shear mixer or similar apparatus is preferred.

If the emulsifier is a di-acetyltartaric acid ester of mono-and/or diglycerides the aqueous phase is preferably set to pH of 4 or higher and subsequently emulsified with a fat phase.

Alternatively if polyglycerol esters are the emulsifiers used, the pH of the composition is between 5 and 8 for reasons of increased stability of the composition under these conditions.

In a further aspect the invention relates to the use of the composition according to the invention for shallow frying of foodstuff. During shallow frying a volume of composition is heated in a frying pan to about 160 to 200 °C. Once the frying medium has reached the desired temperature, food stuff to be fried is put into the hot medium.
Examples of foodstuff which can suitably be fried with the composition according to the invention include meat, vegetables, eggs, fish.

The invention will be illustrated by the following examples.

### Examples

### Analysis methods

### Creaming

Emulsions are tested for stability visually at 15 °C. Emulsion is filled into 100 ml measuring cylinders (diameter about 3.5 cm). The amount of free water that is visible at the bottom of the cylinder is measured after 2 weeks in terms of a volume percentage on total emulsion volume.

### Droplet size

Droplet size distribution of the emulsion is measured by small angle laser light scattering using a Malvern Mastersizer. The average droplet size *(d*_{*43*}*)* of the fresh emulsion is the parameter of interest.

### Bostwick value determination

Pourability is measured according to the standard Bostwick protocol. The Bostwick equipment consists of a 100 ml reservoir with an outlet near the bottom of a horizontally placed rectangular tub and closed with a vertical barrier.
The tub's bottom is provided with a 24 cm measuring scale, extending from the outlet of the reservoir. When equipment and sample both have a temperature of 15 deg. C, the reservoir is filled with 100 ml of the sample after it has been shaken by hand ten times up and down. When the closure of the reservoir is removed the sample flows from the reservoir and spreads over the tub bottom.
The path length of the flow is measured after 15 seconds. The value, expressed as cm per 15 seconds is the Bostwick rating, which is used as measure of pourability.

### Spattering value

The spattering behaviour of compositions according to the invention was evaluated after storage of the products 14 days at 15 °C.
Primary spattering was assessed under standardised conditions in which an aliquot of the composition was heated in a glass dish and the amount of fat spattered onto a sheet of paper held at a fixed distance above the dish was assessed after the water content of the food product had been driven off by heating.

In assessment of the primary spattering value about 35 g of the composition was heated in a glass dish on an electric plate set at 205 °C. (The amount of composition heated depends on the fat content. If the composition contains 60% fat, about 35 g is used, if the composition contains more fat, less product is heated arriving at about 21 g to be heated for a product containing about 97% fat.) The fat that spattered out of the pan by force of expanding evaporating water droplets was deposited on a sheet of paper situated above the pan. The image obtained was compared with a set of standard pictures number 0-10 whereby the number of the picture which most closely resembled the product was recorded as the spattering value for that product. A value of 10 indicates no spattering (no fat loss) and zero indicates very bad spattering (almost total fat loss). The general indication is as follows.

| *Score* | *Comments* |
|---|---|
| 10 | Excellent |
| 8 | Good |
| 5 | Acceptable |
| 4 | Unsatisfactory |
| 2 | Very Poor |

### Example 1A

### Product composition

| Ingredient | Amount in wt% |
|---|---|
| Sunflower Oil | 59 % |
| Water | balance to 100wt% |
| Datem 1935 | 1 % |
| Salt (NaCl) | 1 % |
| Lecithin (cetinol) | 1 % |
| Potassium sorbate | 0.1 % |
| pH 5.2 | |

DATEM is di-acetyl tartaric acid ester of mono-and diglycerides obtainable from Quest.

### Example 1B

Product composition was the same as for example 1A with the modification that example 1B additionally contained 0.1 wt% xanthan gum. Furthermore the pH of the aqueous phase of this example was set to 4.2.

### Example 2

### Product composition

| Ingredient | Amount in wt% |
|---|---|
| Sunflower Oil | 59% |
| Water | balance to 100 wt% |
| Datem 1935 | 1% |
| Salt (NaCl) | 1.5% |
| Lecithin (cetinol) | 1 % |
| Potassium sorbate | 0.1% |
| Guar gum | 0.1% |
| pH 4.3 | |

### Process for example 1A, example 1B and example 2

Water continuous emulsions were prepared starting with the water phase in which the o/w emulsifier and other water-soluble ingredients were dissolved. The pH of the water phase was adjusted to 5.2 (ex 1A), resp. 4.2 (ex 1B), resp. 4.3 (ex 2). The oil phase, in which lecithin was dissolved was slowly added to the water phase after which the two phases were mixed for 5 minutes at medium speed using an ultra-turrax (Janke & Kunkel). The temperature during the emulsification was 40 to 45°C. The emulsions were poured into a 100-ml measuring cylinder and in a glass jar. They were stored at 15°C.

### Example 3

### Product composition

| Ingredient | Amount in wt% |
|---|---|
| Sunflower Oil | 60 % |
| Water | balance to 100 wt% |
| Sucrose ester(S-1570) | 1 % |
| Salt (NaCl) | 1.5 % |
| Lecithin (cetinol) | 0.3 % |
| Potassium sorbate | 0.1 % |
| pH 4 - 4.5 | |

### Example 4

### Product composition

| Ingredient | Amount in wt% |
|---|---|
| Sunflower Oil | 60 % |
| Water | balance to 100wt% |

| Polyglycerol ester | |
|---|---|
| (Triodan) | 1 % |
| Salt (NaCl) | 1.5 % |
| Lecithin (cetinol) | 0.3 % |
| Potassium sorbate | 0.1 % |

### Example 5

### Product composition

| Ingredient | Amount in wt% |
|---|---|
| Sunflower Oil | 60 % |
| Water | balance to 100wt% |
| Citric acid ester (Citrem N12) | 1 % |
| Potassium sorbate | 0.1 % |

### Example 6

### Product composition

| Ingredient | Amount in wt% |
|---|---|
| Sunflower Oil | 60 % |
| Water | balance to 100wt% |
| Polyoxyethylene sorbitan fatty acid ester (Tween 60) | 1 % |
| Salt (NaCl) | 1.5 % |
| Lecithin (Cetinol) | 0.3 % |
| Potassium sorbate | 0.1 % |

### Example 7

### Product composition

| Ingredient | Amount in wt% |
|---|---|
| Sunflower Oil | 50.5 % |
| Water | balance to 100 wt% |
| Datem 1935 | 1.2% |
| Salt (NaCl) | 1.5 % |
| Lecithin (cetinol) | 0.3 % |
| Potassium sorbate | 0.1 % |
| pH 4.5 | |

### Process for examples 3 to 7

Water for the aqueous phase was heated to around 75 °C, and the emulsifier was added while mixing. For example 3 the emulsifier was slurried with a small amount of cold water before addition to hot water. After mixing with a Silverson mixer to disperse the emulsifier, the other water soluble ingredients were added to the aqueous phase. The pH was adjusted to the desired value if required.
The oil phase ingredients (which include lecithin) were mixed and heated to around 60 °C. The oil phase was then added slowly to the aqueous phase while mixing. After addition of the oil phase was complete the mixing speed was turned up to high and mixing continued for 5 minutes more. The premix was then homogenized by recirculating for 3 minutes through a high pressure homogenizer operating at 200 bar.

The resulting products for examples 1-7 were scored as follows:

| **Measure ment** | Ex.1A | Ex. 1B | Ex. 2 | Ex. 3 | Ex. 4 | Ex. 5 | Ex. 6 | Ex. 7 |
|---|---|---|---|---|---|---|---|---|
| Creaming | 2% | 0 | 0 | Trace | 3% | 2% | Trace | 0 |
| Bostwick value (cm/15 sec) | 20 | 16 | 8 | 9 | 13 | 24 | 24 | 24 |
| average droplet size (*d*₄₃) | n.d. | n.d. | n.d. | 2.7 | 2.0 | 3.7 | 1.3 | 1.1 |
| Frying behaviour | | | | | | | | |
| Sediment formation | none | none | None | None | none | none | None | None |
| Shallow frying SV1 / SV2 5 | 8 / 6 | 7 / 5 | 8 / 6.5 | 9 / 7 | 7 / 8 | 9 / 3 | 7 / 5 | 9 / 7 |

| | | | | | | | | |
|---|---|---|---|---|---|---|---|---|
| n.d.: not determined | | | | | | | | |

### Example 8

### Product composition

| Ingredient | Amount in wt% |
|---|---|
| Sunflower Oil | 59.65 % |
| Water | balance to 100wt% |
| Datem 1935 | 1.2 % |
| Salt (NaCl) | 1.5 % |
| Lecithin (cetinol) | 0.3 % |
| Potassium sorbate | 0.1 % |
| Guar gum | 0.1 % |
| Sodium hydroxide solution (20wt%) | 0.15 % |
| Beta carotene | 0.05 % |

300 kg emulsion of the above composition was prepared. Ingredients were premixed in a low shear mixer and after pasteurisation (80 °C) honmogenized in a high pressure homogenizer operating at 200 bar. The resulting emulsion was cooled to 15 °C using a tubular heat exchanger.

The emulsion stability of the resulting emulsion was determined. At 15 °C and 25 °C the emulsion was stable for at least two months. At 30 °C it was stable for at least 6 weeks and at 35 °C at least 5 weeks. The spattering performance was: SV1: 7.5 and SV2: 6.0. The Bostwick value was 14 cm/15 seconds.

## Claims

1. Pourable, water continuous frying composition having a Bostwick value at 15 °C of at least 5, comprising more than 50 to 80 wt% fat, an antispattering agent, at least one emulsifier having a hydrophilic/lipophilic balance value of at least 7, and optionally a biopolymer in an amount of at most 0.3 wt% on total composition weight.

2. Pourable composition according to claim 1 wherein the antispattering agent comprises salt in an amount of from 0.1 to 5 wt% on total weight of the frying composition and a lecithin in an amount of from 0.05 to 2 wt% on total weight of the frying composition.

3. Pourable composition according to claim 1 or 2 wherein the emulsifier is selected from the group comprising di-acetyl tartaric acid esters of monoglycerides and/or diglycerides (DATEM), polyoxyethylene sorbitan fatty acid esters (Tween), sucrose esters, sodium stearoyl lactylate (SSL), polygycerol esters (PGE), acetylated pectin, esters of citric acid with monoglycerides and/or with diglycerides, lactic acid esters of mono-and/or diglycerides, succinic acid esters of mono-and/or diglycerides; or combinations thereof.

4. Pourable composition according to any of claims 1-3 comprising 0.1 to 5 wt% of emulsifier.

5. Pourable composition according to any of claims 1-4 wherein the emulsifier is DATEM in a preferred amount of from 0.3 to 3 wt%.

6. Pourable composition according to any of claims 1-5 **characterised by** a pH of between 3 and 8.

7. Pourable composition according to any of claims 1-6 comprising a biopolymer.

8. Pourable composition according to claim 7 wherein the biopolymer is present in an amount of from 0.01 to 0.3 wt%.

9. Pourable composition according to any of claims 1-8 wherein the fat is dispersed in a water phase, whereby the average droplet size *(d*_{*43*}*)* of the fat is less than 8 µm, preferably less than 6 µm, more preferred from 0.35 to 4 µm.

10. Process for the preparation of a pourable, water continuous frying composition according to any of the previous claims, comprising the steps of emulsification of a fat phase comprising fat phase ingredients with an aqueous phase comprising aqueous phase ingredients such that the resulting average fat droplet size *d*_{*43*} is below 8 µm.

11. Process for the preparation of a pourable, water continuous frying composition according to claim 5 wherein an aqueous phase comprising a di-acetyltartaric acid ester of mono-and/or diglycerides is set to a pH of 4 or higher and subsequently emulsified with a fat phase.

12. Use of the composition according to any of claims 1-9 for shallow frying of foodstuff.

## Patentansprüche

1. Vergießbare Bratzusammensetzung mit kontinuierlicher Wasserphase, die einen Bostwick-Wert bei 15°C von wenigstens 5 hat, mehr als 50 bis 80 Gew.-% Fett, ein Antispritzmittel, wenigstens ein Emulgiermittel mit einem Hydrophil-Lipophil-Gleichgewichts-Wert von wenigstens 7 und gegebenenfalls ein Biopolymer in einer Menge von höchstens 0,3 Gew.-%, bezogen auf das Gesamtzusammensetzungsgewicht, umfasst.

2. Vergießbare Zusammensetzung nach Anspruch 1, wobei das Antispritzmittel Salz in einer Menge von 0,1 bis 5 Gew.-%, bezogen auf das Gesamtgewicht der Bratzusammensetzung, und ein Lecithin in einer Menge von 0,05 bis 2 Gew.-%, bezogen auf das Gesamtgewicht der Bratzusammensetzung, umfasst.

3. Vergießbare Zusammensetzung nach Anspruch 1 oder 2, wobei das Emulgiermittel aus der Gruppe, umfassend Diacetylweinsäureester von Monoglyceriden und/oder Diglyceriden (DATEM), Polyoxyethylensorbitanfettsäureester (Tween), Saccharoseester, Natriumstearoyllactat (SSL), Polyglycerinester (PGE), acetyliertes Pektin, Ester von Citronensäure mit Monoglyceriden und/oder mit Diglyceriden, Milchsäureester von Mono- und Diglyceriden, Bernsteinsäureester von Mono- und/oder Diglyceriden, oder Kombinationen davon, ausgewählt ist.

4. Vergießbare Zusammensetzung nach einem der Ansprüche 1 bis 3, die 0,1 bis 5 Gew.-% Emulgiermittel umfasst.

5. Vergießbare Zusammensetzung nach einem der Ansprüche 1 bis 4, wobei das Emulgiermittel DATEM in einer bevorzugten Menge von 0,3 bis 3 Gew.-% ist.

6. Vergießbare Zusammensetzung nach einem der Ansprüche 1 bis 5, **gekennzeichnet durch** einen pH von zwischen 3 und 8.

7. Vergießbare Zusammensetzung nach einem der Ansprüche 1 bis 6, die ein Biopolymer umfasst.

8. Vergießbare Zusammensetzung nach Anspruch 7, wobei das Biopolymer in einer Menge von 0,01 bis 0,3 Gew.-% vorliegt.

9. Vergießbare Zusammensetzung nach einem der Ansprüche 1 bis 8, wobei das Fett in einer Wasserphase dispergiert ist, wodurch die durchschnittliche Tröpfchengröße (d₄₃) des Fetts weniger als 8 µm, vorzugsweise weniger als 6 µm, insbesondere 0,35 bis 4 µm, ist.

10. Verfahren zur Herstellung einer vergießbaren Bratzusammensetzung mit kontinuierlicher Wasserphase nach einem der vorangehenden Ansprüche, das die Schritte der Emulgierung einer Fettphase, die Fettphaseningredienzien enthält, mit einer wässrigen Phase, die Ingredienzien der wässrigen Phase enthält, derart umfasst, dass die durchschnittliche Tröpfchengröße d₄₃ unter 8 µm ist.

11. Verfahren zur Herstellung einer vergießbaren Bratzusammensetzung mit kontinuierlicher Wasserphase nach Anspruch 5, wobei eine wässrige Phase, die einen Diacetylweinsäureester von Mono- und/oder Diglyceriden umfasst, auf einen pH von 4 oder höher eingestellt und anschließend mit einer Fettphase emulgiert wird.

12. Verwendung der Zusammensetzung nach einem der Ansprüche 1 bis 9 zum Flachbraten von Nahrungsmitteln.

## Revendications

1. Composition pour friture versable, à phase aqueuse continue, ayant une valeur Bostwick d'au moins 5 à 15°C, comprenant plus de 50 à 80 % en poids de graisse, un agent anti-projection, au moins un émulsifiant ayant une valeur d'équilibre lipophile-hydrophile d'au moins 7, et optionnellement, un biopolymère dans une quantité d'au plus 0,3 % du poids total de la composition.

2. Composition versable selon la revendication 1, dans laquelle l'agent anti-projection comprend du sel dans une quantité de 0,1 à 5 % en poids du total de la composition pour friture, et une lécithine dans une quantité de 0,05 à 2 % en poids du poids total de la composition pour friture.

3. Composition versable selon la revendication 1 ou 2, dans laquelle l'émulsifiant est choisi dans le groupe comprenant les esters d'acide di-acétyl tartrique de monoglycérides et/ou de diglycérides (DATEM), les esters d'acide gras de polyoxyéthylène sorbitan (TWEEN), les esters de saccharose, le stéaroyl lactylate de sodium (SSL), les esters de polyglycérol (PGE), la pectine acétylée, les esters d'acide citrique avec des monoglycérides et/ou avec des diglycérides, les esters d'acide lactique de mono- et/ou de diglycérides, les esters d'acide succinique de mono- et/ou de diglycérides ; ou des combinaisons de ceux-ci.

4. Composition versable selon l'une quelconque des revendications 1 - 3, comprenant de 0,1 à 5 % en poids d'émulsifiant.

5. Composition versable selon l'une quelconque des revendications 1-4, dans laquelle l'émulsifiant est du DATEM, dans une quantité préférée de 0,3 à 3 % en poids.

6. Composition versable selon l'une quelconque des revendications 1 - 5, **caractérisée par** un pH entre 3 et 8.

7. Composition versable selon l'une quelconque des revendications 1-6, comprenant un biopolymère.

8. Composition versable selon la revendication 7, dans laquelle le biopolymère est présent dans une quantité de 0,01 à 0,3 % en poids.

9. Composition versable selon l'une quelconque des revendications 1 - 8, dans laquelle la graisse est dispersée dans une phase aqueuse, et la taille moyenne des gouttelettes (d_{*43*}) de la graisse est inférieure à 8 µm, mieux inférieure à 6 µm, mieux encore elle est de 0,35 à 4 µm.

10. Procédé de préparation d'une composition pour friture versable, à phase aqueuse continue selon l'une quelconque des revendications précédentes, comprenant les étapes consistant à émulsionner une phase grasse comprenant les ingrédients de la phase grasse, avec une phase aqueuse comprenant les ingrédients de la phase aqueuse, de telle sorte que les gouttelettes de graisse ainsi obtenues aient une taille moyenne d_{*43*} inférieure à 8 µm.

11. Procédé de préparation d'une composition pour friture versable, à phase aqueuse continue selon la revendication 5, dans laquelle une phase aqueuse comprenant un ester d'acide di-acétyl tartrique de mono et/ou de diglycérides, est réglée à un pH de 4 ou supérieur puis est émulsionnée à une phase grasse.

12. Utilisation de la composition selon l'une quelconque des revendications 1-9 pour frire un aliment à la poêle.
